# EUROPEAN PATENT APPLICATION

(11) **EP 0 845 657 A2**
(43) Date of publication of application: **03.06.1998**
(21) Application number: 97120887.1
(22) Date of filing: 27.11.1997
(51) Int. Cl.: G01B 11/16

(54) **Device for measuring deformation of a structure, in particular a marine stucture**

(30) Priority: 29.11.1996 IT TO960970
(71) Applicant: FINMECCANICA S.p.A., 00195 Roma (IT)
(72) Inventor: Scarpa, Stefano, 16145 Genova (IT)
(74) Representative: Jorio, Paolo

(57) **Abstract**

A modular device (2) including a number of pairs of measuring units (5) located at predetermined points of a marine structure (1), and a processing unit (6) connected to the measuring units (5) to determine flexure and torsion of the marine structure (1). More specifically, respective first measuring units (5) in the pairs are located successively along a first longitudinal structural member (10) of, and extending substantially along the whole length of, a marine structure (1); respective second measuring units (5) in the pairs are located successively along a second longitudinal structural member (11) of the marine structure (1), located on the opposite side of a longitudinal axis (A) of the marine structure (1) with respect to the first longitudinal structural member (10); and each of the first measuring units (5) along the first longitudinal structural member (10) is located side by side with a corresponding second measuring unit (5) on the second longitudinal structural member (11) to monitor flexure and torsion of the portions of the longitudinal structural members (10, 11) of the marine structure (1) to which the pair of measuring units (5) is fitted.

## Description

The present invention relates to a device for measuring deformation of a structure.

The present invention may be used to advantage, though not exclusively, for determining the deformation of a marine structure, to which the following description refers purely by way of example.

Knowing the deformation to which merchant ships are subject is of vital importance for preventing accidents both at sea and during loading operations, particularly of bulk material. Similarly, in the case of naval ships, such knowledge may be used for correcting weapon firing direction and so improving firing precision.

Known devices for determining the deformation of marine structures, e.g. the longitudinal structural members of a ship, employ a measuring unit comprising a laser light emitter located at one end of the member and generating a light beam traveling parallel to the member; and a laser light receiver located at the opposite end of the member, facing the emitter in the traveling direction of the light beam, and generating a position signal correlated to the point of incidence of the light beam on a sensitive surface of the receiver.

Known devices also comprise a processing unit for receiving the position signal generated by the receiver, and determining the bending strain of the member and hence of the ship.

Any bending strain of the member, in fact, shifts the point of incidence of the light beam on the sensitive surface of the receiver from its initial position, assumed as a reference ("zero") position of the undeformed member, to a final position correlated to the amount of deformation of the member; and the processing unit determines deformation of the member on the basis of the value of the position signal generated by the laser light receiver.

A major drawback of known devices is that they provide solely for determining total deflection, as opposed to more complex deformation, of the structural member.

It is an object of the present invention to provide a straightforward, low-cost device for measuring deformation of a structure, in particular a marine structure, designed to overcome the drawbacks typically associated with known devices.

According to the present invention, there is provided a device for measuring deformation of a structure, in particular a marine structure, having a principal axis; said device comprising detecting means for detecting said deformation and located on said structure, and processing means connected to said detecting means and for determining a value of said deformation; said detecting means comprising a measuring unit, in turn comprising emitting means for emitting a light beam having a propagation direction substantially parallel to said principal axis, and receiving means for receiving said light beam and located facing said emitting means in said propagation direction of the light beam to generate a position signal correlated to the point of incidence of said light beam on a sensitive surface of the receiving means; and said emitting and receiving means being fixed rigidly to said structure; characterized in that said detecting means comprise at least one pair of said measuring units located substantially side by side on said structure, on opposite sides of said principal axis; and said processing means comprise calculating means receiving a pair of information signals correlated to respective position signals generated by said measuring units, and generating a flexure signal and a torsion signal respectively indicating flexure of said structure along said principal axis, and torsion of said structure about said principal axis.

A preferred, non-limiting embodiment of the present invention will be described by way of example with reference to the accompanying drawings, in which:
Figure 1 shows a schematic top plan view of a ship comprising a deformation measuring device in accordance with the present invention;
Figure 2 shows an emitter-receiver unit forming part of the device according to the present invention;
Figure 3 shows a block diagram of the device according to the present invention;
Figure 4a shows a partial, schematic view in perspective of a ship comprising the Figure 2 emitter-receiver unit and in the undeformed condition;
Figures 5a and 6a show partial, schematic views in perspective of the Figure 4a ship in different deformation conditions;

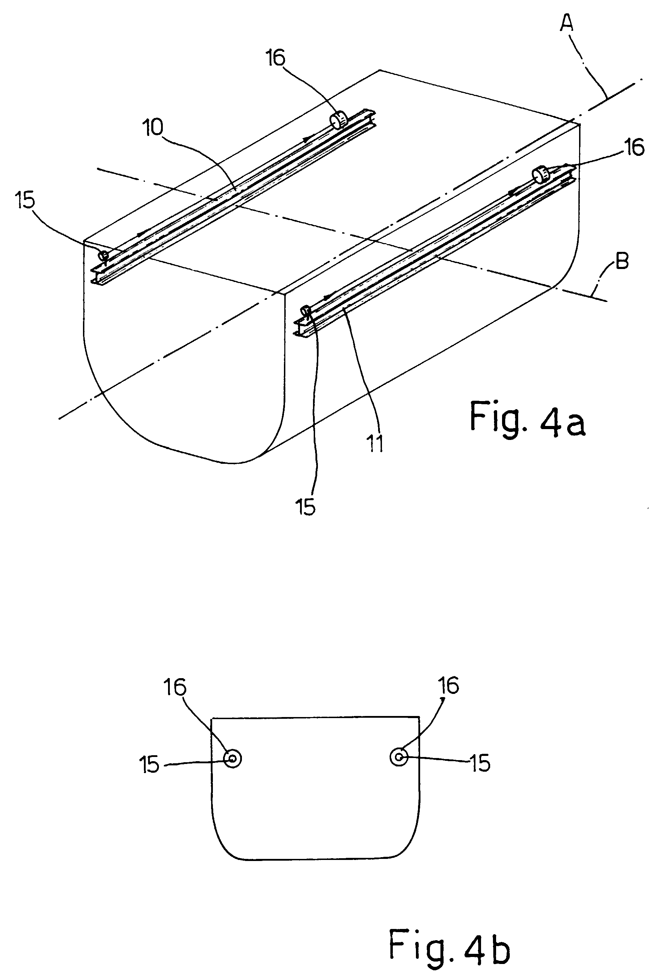

Figures 4b, 5b, 6b show schematic front views of the Figure 4a ship in the Figure 4a, 5a, 6a deformation conditions respectively.

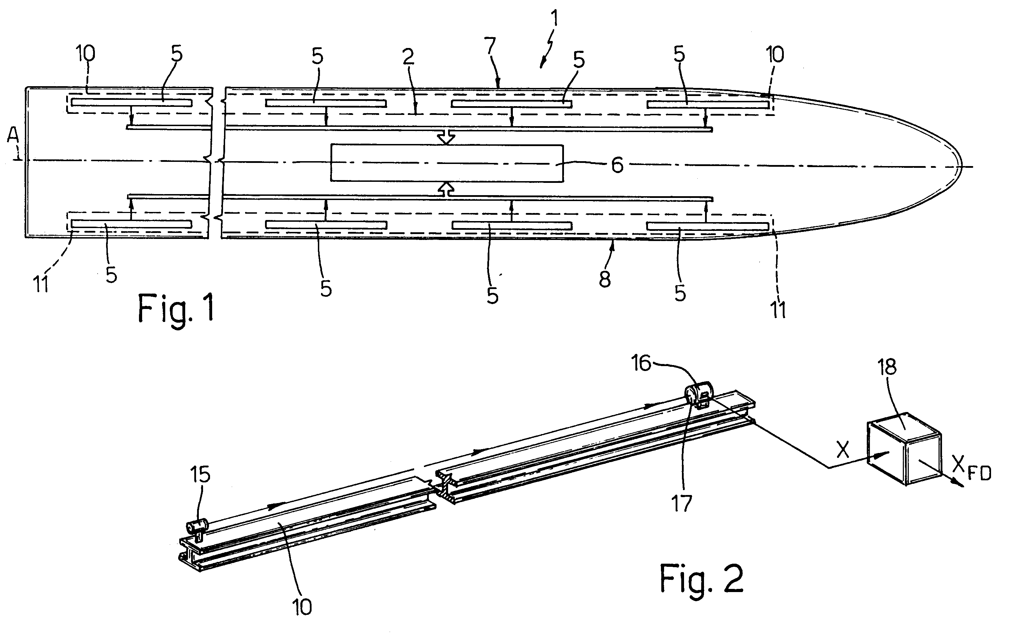

Number 1 in Figure 1 indicates as a whole a ship having a longitudinal axis A, and comprising a device 2 for measuring deformation of ship 1 in accordance with the present invention. Figure 1 shows schematically only the parts of ship 1 relative to the present invention.

Device 2 is modular, and comprises a number of pairs of measuring units 5 located at predetermined points of ship 1; and a processing unit 6 connected to measuring units 5 to determine flexure and torsion of ship 1 as described in detail later on.

More specifically, respective first measuring units 5 in said pairs are located successively along a first longitudinal structural member 10 of ship 1; respective second measuring units 5 in said pairs are located successively along a second longitudinal structural member 11 on the opposite side of longitudinal axis A with respect to first longitudinal structural member 10; and each of the first measuring units 5 along first longitudinal structural member 10 is located facing a corresponding second measuring unit 5 along second longitudinal structural member 11.

First and second longitudinal structural members 10 and 11 of ship 1, considered in the following description, comprise respective beam structure members located on opposite sides of longitudinal axis A and extending substantially along the whole length of ship 1, close to respective sides 7 and 8 of the ship.

As shown in Figure 2, each measuring unit 5 comprises a light emitter 15 fitted adjustably to a respective portion of member 10, 11, and generating a collimated laser beam having a propagation direction parallel to the respective portion of member 10, 11 to which emitter 15 is fitted; and a light receiver 16, which is positioned facing emitter 15 in the propagation direction of the laser beam, is fitted adjustably to a respective portion of member 10, 11, at a predetermined distance from emitter 15, and generates a position signal X correlated to the point of incidence of the laser beam on a sensitive surface 17 of receiver 16.

Using an emitter 15 generating a collimated laser beam (i.e. a light beam generated by a solid-state laser and focused by an appropriate system of lenses), the corresponding receiver may be located at a much greater distance, even as much as some tens of meters, as compared with conventional optical emitters.

When installing each measuring unit 5, emitter 15 and receiver 16 are so oriented with respect to each other that the laser beam generated by emitter 15 impinges on the exact center of sensitive surface 17 of receiver 16, and are then locked so as to be connected rigidly to member 10, 11. In the absence of deformation of the respective portion of member 10, 11, the position signal X generated by receiver 16 therefore assumes a given level, i.e. zero, which is assumed as a reference level, and any shift, caused by deformation of the respective portion of member 10, 11, in the point of incidence of the laser beam on sensitive surface 17 of receiver 16 therefore produces a variation in the level of position signal X. On the basis of the level of position signal X and the known distance between emitter 15 and receiver 16, it is therefore possible to determine the amount of deformation of the respective portion of member 10, 11, which is generally expressed in radians or submultiples (milliradians).

Receiver 15 may be linear or planar. The first type includes receivers with a substantially elongated sensitive surface 17, i.e. greater in length than in width, and generating a position signal X correlated solely to the point of incidence of the light beam along the principal dimension (length) of sensitive surface 17. This type of receiver requires an emitter 15 generating a substantially elliptical light beam, in which the major axis of the ellipse is perpendicular to the principal dimension of sensitive surface 17 of receiver 16.

The second type includes receivers 16 with a substantially square sensitive surface 17, and generating a position signal X correlated to the position components of the point of incidence of the light beam, with reference to the center of sensitive surface 17 of receiver 16. This type of receiver 16 requires an emitter 15 generating a substantially circular light beam.

As shown in Figure 2, each measuring unit 5 also comprises a processing circuit 18 for receiving and processing position signal X and generating a digital information signal I.

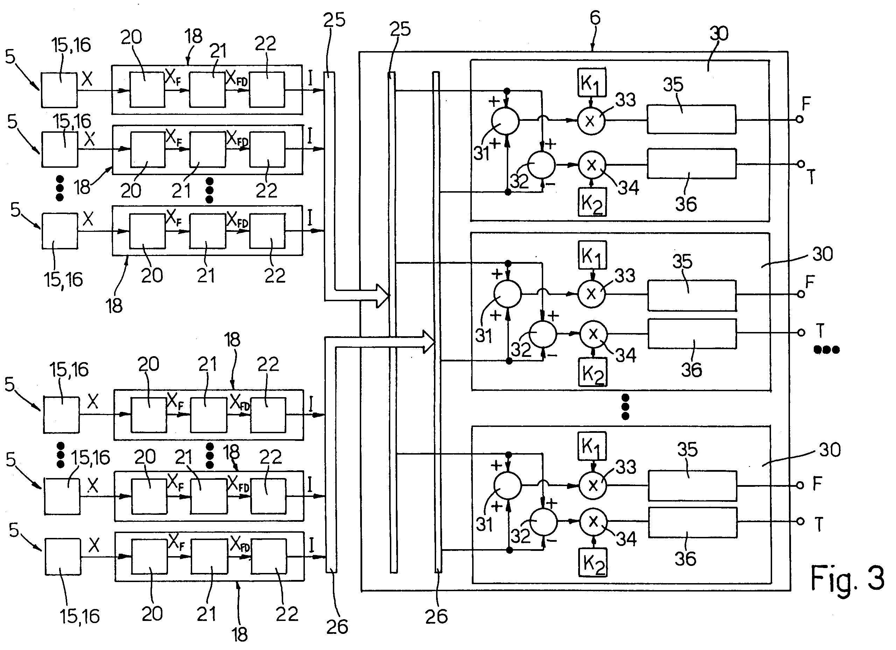

More specifically, and as shown in more detail in Figure 3, each processing circuit 18 comprises a low-pass, 10 Hz cutoff-frequency, presampling filter 20 receiving the position signal X generated by respective receiver 16, and generating a filtered position signal X_{F}; and an analog/digital converter 21 receiving the filtered position signal X_{F}, and generating a digital processed position signal X_{FD} equal to the input signal sampled and quantized. More specifically, the processed position signal X_{FD} comprises a sequence of digital data sets, e.g. 8-bit data bytes, representing the values assumed by the filtered position signal X_{F} during sampling.

Each processing circuit 18 also comprises a known data framing circuit 22 receiving the data bytes of processed position signal X_{FD}, and generating serially an information signal I comprising a sequence of data frames, each comprising a number of data bytes.

The information signals I generated by measuring units 5 are supplied to processing unit 6 over two known local-area digital communication networks (LANs) 25, 26 not described in detail. More specifically, a first LAN 25 transmits the information signals I generated by measuring units 5 along first member 10, and a second LAN 26 transmits the information signals I generated by measuring units 5 along second member 11.

As shown in Figure 3, processing unit 6 is modular, and comprises a number of calculating circuits (concentrators) 30, one for each pair of measuring units 5.

More specifically, each calculating circuit 30 receives two information signals I over LANs 25, 26, and generates a flexure gradient signal F and a torsion gradient signal T, the significance of which is explained later on.

Each calculating circuit 30 operates on pairs of data frames, i.e. pairs of data frames generated at the same instant in time by the pair of measuring units 5 connected to calculating circuit 30. More specifically, for each pair of data frames, each calculating circuit 30 operates on pairs of data bytes, i.e. pairs of data bytes generated by sampling and quantizing at the same instant in time the pair of filtered position signals X_{F} at the outputs of the two prefiltering filters 20 forming part of the pair of measuring units 5 connected to calculating circuit 30.

Each calculating circuit 30 comprises an adding circuit 31 and a subtracting circuit 32, each receiving the two corresponding information signals I, and which respectively generate a sum signal and a difference signal respectively equal to the sum of and the difference between the two input information signals I. More specifically, the sum signal and the difference signal each comprise a data frame sequence defined respectively by the sum of and the difference between corresponding data frames in the input information signals I.

Each calculating circuit 30 also comprises a first and a second multiplying circuit 33, 34 respectively receiving the sum signal and the difference signal, and respectively generating a first and a second intermediate signal respectively equal to the sum signal multiplied by a constant k₁, and to the difference signal multiplied by a constant k₂.

More specifically, constants k₁ and k₂ are conversion constants for converting the electric measuring unit (voltage), in which information signals I and the signals derived from them are expressed, into an angular measuring unit (radians) in which flexure gradient signal F and torsion gradient signal T are expressed.

Each calculating circuit 30 also comprises a first and a second low-pass filter 35, 36 respectively receiving the first and the second intermediate signal, and respectively generating flexure gradient signal F and torsion gradient signal T respectively indicating the flexure and torsion, e.g. induced respectively by pitching and rolling of ship 1, of the portions of respective members 10, 11 to which measuring units 5 are fitted.

Low-pass filters 35, 36 are numeric for eliminating any high-frequency variations in the data frames at their inputs, and therefore have a cutoff frequency of 3-5 Hz, depending on the environment in which device 2 according to the present invention is operated.

Flexure and torsion gradient signals F and T each comprise a sequence of a number of data frames, in turn comprising a number of data bytes, each indicating a value of the flexure and, respectively, the torsion of the portion of member 10, 11 to which the respective measuring units are fitted.

Given the flexure and torsion values indicated by the data bytes, and the distance between emitter 15 and receiver 16, it is therefore possible to calculate a mean value of the flexure and torsion of the portion of member 10, 11 to which emitter 15 and receiver 16 are fitted, by simply dividing the flexure and torsion values in the data bytes by the distance between emitter 15 and receiver 16.

Performing the above calculation for each of the flexure and torsion gradient signals F and T generated by each of calculating circuits 30 therefore provides for continuously monitoring two-dimensional deformation of ship 1.

The calculated mean flexure and torsion values may be used for various purposes. For example, on the basis of a mathematical model of ship 1 memorized in processing unit 6, they may be used to calculate the instantaneous stress of ship 1, and be compared with maximum permissible threshold values, normally related to yield point or breaking load, to safeguard ship 1 and prevent personal injury; or they may be used by artillery pointing devices to correct firing direction as a function of the deformation of ship 1; or they may be displayed directly on a dedicated display unit to enable direct monitoring of the deformation of ship 1.

To show more clearly how measuring device 2 according to the present invention is actually used, operation of the device will now be described with reference to a number of typical working conditions.

Figures 4a and 4b respectively show a view in perspective and a front view of a portion of ship 1 in the undeformed condition.

Rigid rolling and/or pitching of ship 1 produces no flexure or torsion of members 10, 11, so that, as shown in Figure 4b, the beams generated by emitters 15 remain in the respective zero positions, and position signals X generated by respective receivers 16 maintain the same value (zero reference) as formerly, i.e. prior to rolling and/or pitching of ship 1.

As such, the output of adding circuit 31 of calculating circuit 30 receiving information signals I corresponding to said position signals X presents a sum signal having value corresponding to the sum of reference value of said position signals X (i.e. zero reference), i.e. indicating zero flexure of the two respective portions of members 10, 11 during rolling and/or pitching of ship 1.

The output of subtracting circuit 32 of calculating circuit 30 receiving information signals I corresponding to said position signals X presents a zero difference signal indicating zero torsion of the two respective portions of members 10, 11 during rolling and/or pitching of ship 1.

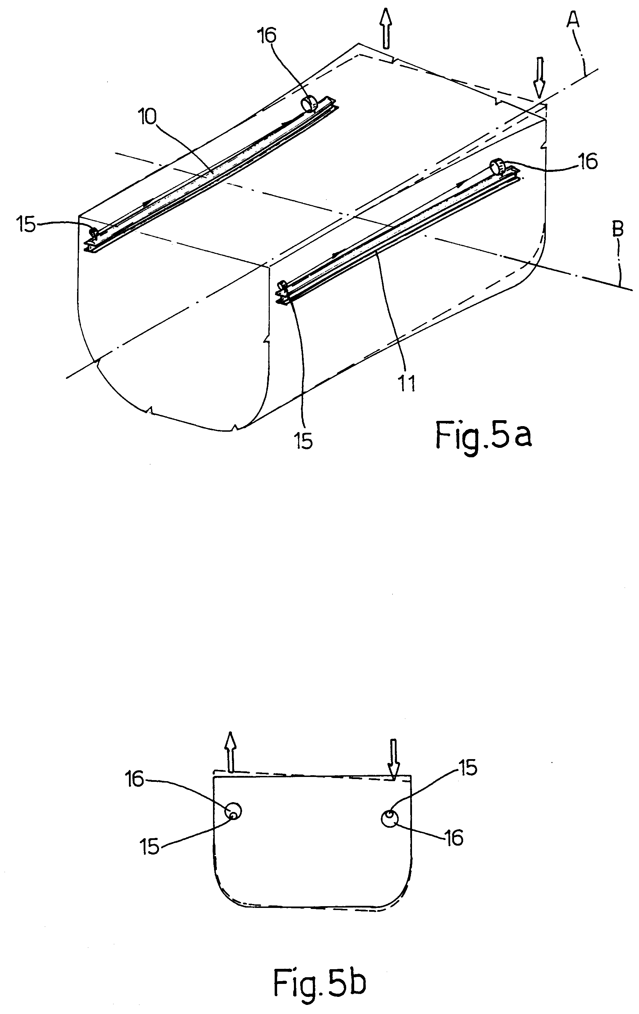

Figures 5a, 5b show the situation in which a portion of ship 1 is subjected to "rolling" torsion, i.e. about axis A; in which case, the two portions of members 10, 11 undergo flexure in opposite directions, due to the sections fitted with receivers 16 being rotated differently as compared with the sections fitted with emitters 15.

The position of each emitter 15 in relation to respective receiver 16 therefore varies. More specifically, and as shown more clearly in Figure 5b, the points of incidence of the light beams on the sensitive surfaces of the two receivers 16 are shifted equally but in opposite directions, so that position signals X generated by respective receivers 16 assume the same value but of opposite sign.

The output of adding circuit 31 of calculating circuit 30 receiving information signals I corresponding to said position signals X therefore presents a zero sum signal, whilst the output of subtracting circuit 32 presents a difference signal of a value other than zero and correlated to the amount of torsion of the corresponding portion of ship 1.

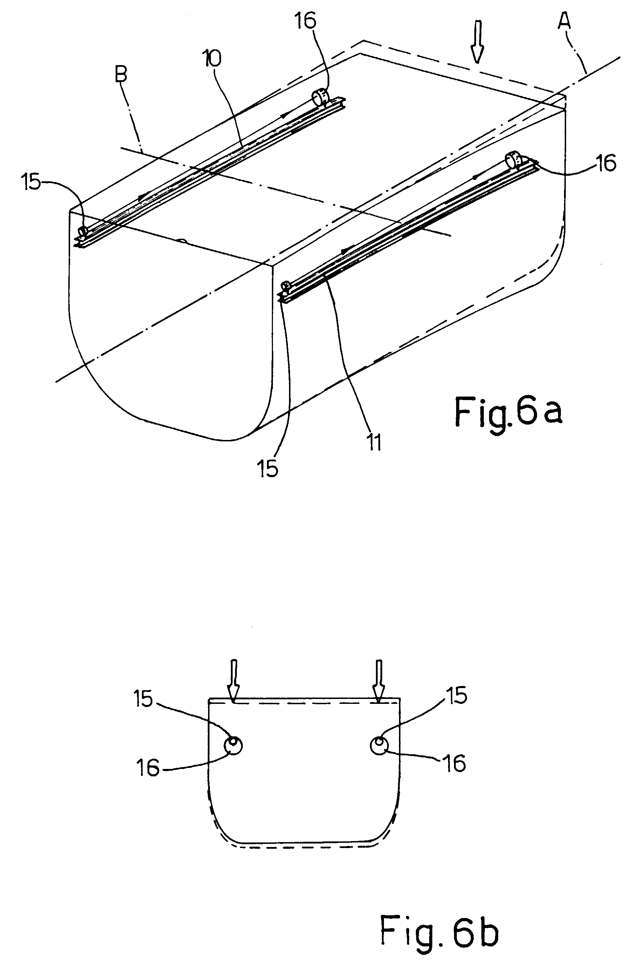

Figures 6a, 6b show the situation in which a portion of ship 1 is subjected to purely "pitching" flexure, i.e. in a vertical plane containing axis A. In this case, the two portions of members 10, 11 undergo flexure in the same direction, so that the points of incidence of the light beams on the sensitive surfaces of the two receivers 16 shift equally in the same direction, and the position signals generated by receivers 16 assume the same value and sign.

The output of subtracting circuit 32 of calculating circuit 30 receiving information signals I corresponding to said position signals X therefore presents a zero difference signal, whilst the output of adding circuit 31 presents a sum signal of a value other than zero and correlated to the amount of flexure of the corresponding portion of ship 1.

Situations involving combined flexure and torsion of ship 1 are of course detected by calculating circuits 30 generating flexure and torsion gradient signals F and T of values simultaneously other than zero. Such situations, which are not described for the sake of brevity, may nevertheless be broken down into flexure and torsion of appropriate value.

The advantages of device 2 according to the present invention will be clear from the foregoing description.

In particular, device 2 according to the present invention provides for determining both flexure and torsion of any elongated structure, be it a ship, bridge or flyover, to both safeguard the structure and ensure user safety.

Device 2 provides for determining two-dimensional deformation of ship 1 along the portions fitted with measuring units 5. Deformation of the ship along critical portions of members 10, 11 may therefore be monitored even more accurately by increasing the number of measuring units 5 along such portions.

Device 2 according to the present invention is intrinsically highly reliable. Performance is not seriously impaired by failure of any one of measuring units 5, by virtue of the missing information being obtainable, for example, by interpolating the information provided by the adjacent measuring units 5.

Finally, using laser emitters and receivers provides for achieving highly accurate calculations, to roughly 0.1 milliradian sensitivity.

Clearly, changes may be made to device 2 as described and illustrated herein without, however, departing from the scope of the present invention.

## Claims

1. A device for measuring deformation of a structure, in particular a marine structure, having a principal axis (A); said device (2) comprising detecting means (5) for detecting said deformation and located on said structure (1), and processing means (6) connected to said detecting means (5) and for determining a value of said deformation; said detecting means comprising a measuring unit (5), in turn comprising emitting means (15) for emitting a light beam having a propagation direction substantially parallel to said principal axis (A), and receiving means (16) for receiving said light beam and located facing said emitting means (15) in said propagation direction of the light beam to generate a position signal (X) correlated to the point of incidence of said light beam on a sensitive surface (17) of the receiving means (16); and said emitting and receiving means (15, 16) being fixed rigidly to said structure (1); characterized in that said detecting means comprise at least one pair of said measuring units (5) located substantially side by side on said structure (1), on opposite sides of said principal axis (A); and said processing means (6) comprise calculating means (30) receiving a pair of information signals (I) correlated to respective position signals (X) generated by said measuring units (5), and generating a flexure signal (F) and a torsion signal (T) respectively indicating flexure of said structure (1) along said principal axis (A), and torsion of said structure (1) about said principal axis (A).

2. A device as claimed in Claim 1, characterized in that said calculating means (30) comprise adding means (31) and subtracting means (32), each receiving said information signals (I), and respectively generating a sum signal and a difference signal respectively equal to the sum of and the difference between said position signals (X); first and second multiplying means (33, 34) respectively receiving said sum signal and said difference signal, and respectively generating a first and a second intermediate signal respectively equal to the sum signal multiplied by a constant k₍₁₎, and to the difference signal multiplied by a constant k₍₂₎; and first and second filtering means (35, 36) respectively receiving said first and said second intermediate signal, and respectively generating said flexure signal (F) and said torsion signal (T).

3. A device as claimed in Claim 2, characterized in that each of said measuring units (5) comprises signal processing means (18) for processing the respective position signal (X) and interposed between the respective receiving means (16) and said calculating means (30); said signal processing means (18) comprising third filtering means (20) receiving the respective position signal (X) and generating a filtered position signal (X_{F}), analog/digital converting means (21) receiving said filtered position signal (X_{F}) and generating a digital processed position signal (X_{FD}) equal to the input signal sampled and quantized, and data framing means (22) receiving said processed position signal (X_{FD}) and generating a respective information signal (I) which is supplied to said calculating means (30).

4. A device as claimed in Claim 3, characterized by comprising a number of pairs of measuring units (5), and respective signal processing means (18) and calculating means (30); respective first measuring units of said pairs being located successively along a first longitudinal structural member (10) of said structure (1), and respective second measuring units (5) of said pairs being located successively along a second longitudinal structural member (11) of said structure (1), on the opposite side of said principal axis (A) with respect to said first longitudinal structural member (10); each of said first measuring units (5) being located side by side with a corresponding said second measuring unit (5).
